# EUROPÄISCHE PATENTSCHRIFT

(11) **EP 2 023 849 B1**
(45) Veröffentlichungstag und Bekanntmachung des Hinweises auf die Patenterteilung: **14.10.2015**
(21) Anmeldenummer: 07725647.7
(22) Anmeldetag: 30.05.2007
(51) Int. Cl.: A61C 9/00, G01B 11/24

(54) **ZAHNÄRZTLICHER ULTRASCHALL-AUFNEHMER MIT STÜTZSTRUKTUR UND VERFAHREN ZUR DATENAUFNAHME MIT DIESEM ULTRASCHALL-AUFNEHMER**
DENTAL ULTRASONIC SENSOR WITH SUPPORT AND METHOD OF ACQUIRING DATA WITH SAID ULTRASONIC SENSOR
CAPTEUR ULTRASONIQUE DENTAIRE AVEC SUPPORT AINSI QUE METHODE D'AQUISITION DE DONNÉES AVEC LEDIT CAPTEUR ULTRASONIC

(30) Priorität: 31.05.2006 DE 102006025775
(43) Veröffentlichungstag der Anmeldung: 18.02.2009
(73) Patentinhaber: Rheinisch-Westfälisch-Technische Hochschule Aachen, 52062 Aachen (DE)
(72) Erfinder: HEGER, Stefan, 52064 Aachen (DE); LATZKE, Peter, 52072 Aachen (DE); RADERMACHER, Klaus, 52222 Stolberg (DE); SPIEKERMANN, Hubertus, 42781 Haan (DE); TINSCHERT, Joachim, 52080 Aachen (DE)
(74) Vertreter: Cohausz Hannig Borkowski Wißgott
(86) Internationale Anmeldenummer: PCT/EP2007/004756
(87) Internationale Veröffentlichungsnummer: WO 2007/137826

(56) Entgegenhaltungen:
- JP-A- S60 119 930
- US-A- 4 611 288
- US-A- 5 755 571
- US-A- 6 050 821
- US-B2- 6 751 494

## Beschreibung

Die Erfindung betrifft ein Verfahren zur Datenaufnahme im Mund eines Patienten mittels eines Ultraschall-Aufnehmers nach dem Oberbegriff des Patentanspruchs 1, sowie entsprechende Vorrichtungen, Anlagen und deren Verwendung.

Beim Zahnarzt, Kieferchirurg oder Kieferorthopäden wird heutzutage häufig mit speziellen elastomeren Abformmaterialien direkt im Mund des Patienten die Form eines Zahnes, Zahnbereichs oder Restzahnbereichs abgeformt. Diese Materialien werden zum Beispiel in einen Löffel appliziert, der dann auf den abzuformenden Zahnbereich im Mund des Patienten gedrückt wird. Während dem Aushärten des Materials muss der Löffel ruhig gehalten werden. Gelingt dies nicht, so kann es zu Fehlern kommen. Nach dem Aushärten kann der so gewonnene Abdruck aus dem Mund entnommen und weiter bearbeitet werden. Typischerweise wird in einem weiteren Schritt ein Gipsmodel erstellt. Auch bei diesem Schritt können Fehler auftreten.

Der beschriebene Vorgang ist zeitaufwendig und für den Patienten häufig sehr unangenehm. Ausserdem sind die Kosten für das Material und der erforderliche Zeitaufwand relativ hoch und die Resultate der Abformung sind teilweise ungenau. Zudem kann die Anwendung dieses Ansatzes im Patientenmund zu Gingivarezessionen und dem Verlust von bindegewebigem Attachement führen. Bei der beschriebenen konventionellen Abformtechnik kann es auch Probleme durch eine Kontamination der abzuformenden Oberfläche mit Blut, Speichel und Sulkusflüssigkeit geben.

Es gibt jedoch bereits heute ein CCD-basiertes System zur sogenannten intraoralen Datenabnahme, das dazu eingesetzt werden kann, um mindestens in einigen Fällen die oben beschriebene Abformung zu ersetzen. Details sind dem US-Patent US 6,169,781 und dem korrespondierenden Gebrauchsmuster DE 29717432 zu entnehmen. Mit diesem System kann jedoch nur ein einzelner präparierter Zahn intraoral, dass heisst im Mund des Patienten, erfasst werden, der für ein Inlay, Onlay oder eine Einzelkrone vorbereitet wurde. Es sind jedoch beim Einsatz dieses Systems zeitintensive Vorbereitungen notwendig, da sowohl Blut, als auch Speichel oder Zahnfleisch die Datenabnahme verfälschen können. Der zu erfassende Zahn muss mittels Kofferdam absolut trocken gelegt werden und es muss unter Umständen die Präparationsgrenze freigelegt werden, was für den Patienten schmerzhaft sein kann. Zusätzlich sollte der entsprechende Zahn mit einem speziellen Puder behandelt werden, um Reflektionen während einer Datenaufnahme zu vermeiden. Dieses System bringt also auch mehrere Nachteile mit sich, die sich einerseits in relativ hohen Kosten niederschlagen, die aber andererseits für den Patienten auch zu Schmerzen oder mindestens Unannehmlichkeiten führen.

Aus dem deutschen Gebrauchsmuster DE 9319391 ist ein weiteres System bekannt, das mittels eines CCD-Bildsensors im Mund eines Patienten Daten aufnimmt. Der gezeigte Bildsensor ist relativ gross.

Es ist ein weiterer Nachteil der genannten CCD-basierten Systeme, dass immer nur Einzelzahnaufnahmen gemacht werden können, dass heisst die Geometrie nur eines einzigen Zahnes ermittelt werden kann. Somit kann man unter Verwendung dieses Systems auch nur kleine Zahnrestaurationen, zum Beispiel Inlays oder Einzelkronen, anfertigen. Eine weitere Einschränkung des beschriebenen Systems liegt darin, dass die Präparationsränder des zu erfassenden Zahnes supragingival liegen müssen.

Ausserdem gibt es bildgebende Systeme, die mittels Röntgenstrahlen arbeiten. Durch diese Systeme kann es zu einer Belastung des Patienten mit Röntgenstrahlen kommen, die als nicht unproblematisch betrachtet wird.

Es gibt bereits verschiedenste Ultraschall-Systeme, die im Medizinalbereich zur Anwendung kommen. Typische Nachteile sind jedoch, dass keine Aufnahmen hinter Knochen (wegen der Totalreflexion) möglich sind. Ausserdem ist das Verhalten der Ultraschallwelle sehr komplex.

Im Zahnbereich werden Ultraschall-Verfahren bislang experimentell zur sonoerosiven Bearbeitung von Hochleistungskeramik, zur Dichtemessung und Charakterisierung von Zahnsubstanzen oder zur Darstellung paradontaler Strukturen eingesetzt. Ein Beispiel eines Systems zur Ermittlung von paradontalen Taschen im Bereich zwischen Zähnen und Zahnfleisch ist dem US Patent 5,100,318 zu entnehmen. Der verwendete Ultraschallkopf hat eine Apertur im Millimeterbereich und muss direkt auf die Gingiva gesetzt werden, um eine Zahnfleischtasche erfassen zu können. Ein weiteres sehr ähnliches System ist dem US Patent 5,755,571 zu entnehmen.

Ein weiteres System, das zum Erfassen von Einzelzähnen oder Zahnbögen vorgeschlagen wird, ist den US Patenten US 6,050,821 und US 6,638,219 zu entnehmen. Gemäss diesen US-Patentschriften kommt eine Aneinanderreihung von mehreren Ultraschallwandlern zum Einsatz, die beim Abtasten gemeinsam eine Bewegung ausführen, um die Zähne von mehreren Seiten erfassen zu können. Die Ultraschallwandler sitzen in einer Art Kappe, oder in einer Schale, die über die zu untersuchenden Zähne gestülpt wird. Es wird vorgeschlagen die Ultraschallwandler mit Wasser zu umspülen, um so für eine Ankopplung zu sorgen. Da die Kappe oder Schale aber nicht komplett gegenüber den Zähnen oder der Zahnleiste abgedichtet werden kann, muss permanent Wasser nachgeführt werden.

Insgesamt ist auch dieser Ansatz aufwendig und ungenau. Ausserdem ist der gesamte Aufbau teuer und kompliziert. Eine Reproduzierbarkeit von einmal vorgenommenen Messungen und eine Vergleichbarkeit von aufgenommenen Daten ist kaum gegeben.

Aus der publizierten PCT-Patentanmeldung WO 2005/034785 A2 sind verschiedene ultraschall-basierte Vorrichtungen bekannt, um Kiefer oder den inneren Aufbau eines Kieferbereichs abtasten zu können. Eine dieser Vorrichtungen ist besonders geeignet, um zum Beispiel den Verlauf eines Nervenstrangs im Kiefer darstellen zu können. Der vorgeschlagene Aufbau ist relativ kompliziert und es muss zusätzlich zu der eigentlichen Ultraschallsensorik ein Positionsgeber eingesetzt werden. Der erzielbare Aufnahmebereich ist relativ klein.

Dokument JP S60-119930 A offenbart ein Verfahren und eine Vorrichtung zur Datenaufnahme im Mund eines Patienten mittels eines Ultraschall-Aufnehmers umfassend einen Ankopplungskörper und bewegliche Ultraschall-Ablenkmittel, wobei die folgenden Schritte ausgeführt werden: Beaufschlagen des Ultraschall-Aufnehmers mit Anregungssignalen um eine Ultraschallwelle zu erzeugen, Bewegen der Ultraschall-Ablenkmittel so, dass die Ultraschallwelle mindestens einen Zahnbereich überstreicht, Aufnehmen von an dem Zahnbereich reflektierten Wellen und Bereitstellen von entsprechenden Reflektionssignalen, Zurverfügungstellen der Anregungssignale und Reflektionssignale für eine Auswerteeinheit, und Erzeugen eines Datensatzes durch die Auswerteeinheit aus den Anregungssignalen und Reflektionssignalen.

Eine Aufgabe der Erfindung wird somit darin gesehen, ein Verfahren und eine entsprechende Vorrichtung bereit zu stellen, das/die Nachteile der bisher bekannten Ansätze vermeidet oder mindestens reduziert. Weiterhin soll die Anwendung einfach und unkompliziert sein, um so einen Einsatz auch durch weniger geschulte Kräfte zu ermöglichen. Ausserdem ist es Aufgabe der Erfindung eine kostengünstige Vorrichtung bereit zu stellen. Vor allem steht jedoch im Vordergrund, dass die Anwendung des Verfahrens und der Einsatz der Vorrichtung für den Patienten nicht unangenehm sein darf und möglichst keine Nebenwirkungen haben soll. Ausserdem ist die Reproduzierbarkeit von Datenabnahmen von Bedeutung.

Wichtig ist auch, dass die Erfindung problemlos sowohl für das Erfassen im Frontzahnbereich, als auch im hinteren molaren Bereich eingesetzt werden kann.

Diese Aufgabe wird erfindungsgemäss durch die Merkmale des kennzeichnenden Teils des Verfahrensanspruchs 1 gelöst. Vorteilhafte Weiterbildungen und Eigenschaften des erfindungsgemässen Verfahrens werden durch die Patentansprüche 2 bis 13 definiert.

Bei diesem Verfahren kann die Auswerteeinheit den Datensatz bearbeiten, um ihn für die Herstellung oder Bearbeitung
- eines Kronengerüsts, und/oder
- eines Brückengerüsts, und/oder
- einer Implantat-Suprakonstruktion, und/oder
- einer Zahnspange, und/oder
- eines entnehmbaren oder festsitzenden Zahnersatzes, und/oder
- eines anderen kieferorthopädischen Elements
- einsetzen zu können.

Auch kann die Auswerteeinheit den Datensatz bearbeiten, um ihn für die Diagnose einsetzen zu können. Ein Datensatz kann bevorzugt mit einer lateralen Genauigkeit zwischen 50 und 100 µm aufgenommen werden.

Das Verfahren kann z.B. eingesetzt werden zur nicht-invasiven dreidimensionalen Erfassung des Zahnbereichs oder des Restzahnbereichs.

Diese Aufgabe wird auch durch die Merkmale des kennzeichnenden Teils des Vorrichtungsanspruchs 14 gelöst. Vorteilhafte Weiterbildungen und Eigenschaften der erfindungsgemässen Vorrichtung werden durch die Patentansprüche 15 bis 19 definiert.

Beispielsweise kann eine solche Vorrichtung in oder an einem Zahnarztstuhl integriert sein.

In einer der Ausführungen des Verfahrens und der Vorrichtung handelt es sich bei dem Ultraschall-Aufnehmer um einen Intraoral-Scanner, dessen Abtastbewegung durch die Bewegung der Ultraschall-Ablenkmittel erzeugt wird. Dabei kann es sich bei dem Ultraschall-Aufnehmer z.B. um einen Ultraschall-Aufnehmer mit einem Sender (Schallkopf) handeln, der im Frequenzbereich zwischen 1 und 80 MHz und vorzugsweise im Bereich zwischen 40 MHz und 50 MHz arbeitet. Beispielsweise kann der Ultraschall-Aufnehmer einen Piezo-Ultraschallwandler und einen Empfänger umfassen, deren Resonanzfrequenz im Bereich zwischen 1 und 80 MHz und vorzugsweise im Bereich zwischen 40 MHz und 50 MHz liegt.

Es kann sich bei dem Ultraschall-Aufnehmer auch um einen bildgebenden Ultraschall-Aufnehmer handeln. Auch kann es sich bei dem Ultraschall-Aufnehmer um einen Ultraschall-Aufnehmer mit (räumlich) getrenntem Sender (Schallkopf) und Ultraschall-Empfänger (Wandler) handeln. Bei dem Ultraschall-Aufnehmer kann es sich um einen mit (räumlich) getrenntem Sender (Schallkopf) und Empfänger (Wandler) handeln.

Die Ultraschall-Ablenkmittel können Spiegelmittel umfassen, die so von ausserhalb des Mundes bewegbar sind, dass die Ultraschallwelle durch die Spiegelmittel so gelenkt wird, dass sie den Zahnbereich oder den Restzahnbereich überstreicht. Auch können die Spiegelmittel so ansteuerbar und bewegbar sein, dass sie entlang einer vorgegebenen Raumkurve schwenkbar sind. Der Ultraschall-Aufnehmer kann Spiegelmittel als Ultraschall-Ablenkmittel umfassen, die mittels hybrider, kinematischer Mittel so von ausserhalb des Mundes bewegbar sind, dass die Ultraschallwelle durch die Spiegelmittel so gelenkt wird, dass sie den Zahnbereich oder den Restzahnbereich überstreicht.

Verwendet werden kann eine solche Vorrichtung z.B. im Zusammenhang mit der Herstellung oder Bearbeitung
- eines Kronengerüsts, und/oder
- eines Brückengerüsts, und/oder
- einer Implantat-Suprakonstruktion, und/oder
- einer Zahnspange, und/oder
- eines entnehmbaren oder festsitzenden Zahnersatz, und/oder
- eines anderen kieferorthopädischen Elements,
oder zur Diagnose.

Diese Aufgabe wird auch durch eine Anlage mit einem Zahnarztstuhl und einer vorbeschriebenen Vorrichtung gelöst, die eine Datenverarbeitungseinrichtung umfasst, um Datensätze zur Übergabe an ein Bearbeitungssystem oder ein bilderzeugendes System bereit zu stellen.

Einzelheiten und Vorteile der Erfindung werden im Folgenden anhand der Beschreibung und mit Bezug auf die Zeichnung ausführlich beschrieben. Es zeigt:
- **Fig. 1**: eine schematische Seitenansicht eines Zahnbereichs und Schnittansicht eines Ultraschall-Aufnehmers;
- **Fig. 2**: eine schematische Seitenansicht eines Zahnbereichs und Schnittansicht eines weiteren Ultraschall-Aufnehmers;
- **Fig. 3**: eine schematische Schnittansicht eines eren Ultraschall-Aufnehmers;
- **Fig. 4**: eine schematische Perspektivansicht eines Unter- und Oberkiefers mit einem Zahnbereich und einer Schnittansicht einer erfindungsgemässen Vorrichtung;
- **Fig. 5**: eine schematische Draufsicht eines Unterkiefers mit einem einer weiteren erfindungsgemässen Vorrichtung;
- **Fig. 6**: ein Flussdiagramm eines ersten erfindungsgemässen Verfahrens;
- **Fig. 7**: ein Flussdiagramm einer Erweiterung/Ergänzung des ersten erfindungsgemässen Verfahrens;
- **Fig. 8**: ein Flussdiagramm eines weiteren erfindungsgemässen Verfahrens;
- **Fig. 9**: eine schematische Seitenansicht einer weiteren Ausführungsform der Erfindung.

Im Folgenden werden die Begriffe Zahnbereich und Restzahnbereich verwendet. Diese Begriffe sind synonym zu verstehen für die folgenden Bereiche im Mund eines Patienten:
- ein Einzelzahn,
- ein Zahnbogen mit mehr als einem Einzelzahn,
- ein Zahn, der beschädigt ist oder bearbeitet wurde (z.B. ein Zahn mit einer Kavität, oder ein abgeschliffener Zahnstumpf),
- eine Präparation zum Aufsetzen oder Fixieren einer Krone oder Brücke (zum Beispiel ein Kieferimplantat)
- eine Zahnlücke,
- ein Abschnitt eines Kiefers (mit oder ohne Zähne),
- ein Abschnitt eines Kieferknochens
- entnehmbarer oder festsitzender Zahnersatz,
- ein Implantat (zum Beispiel ein subperiostales Implantat),
- eine Suprakonstruktion zum Aufsetzen auf ein Implantat,
- eine Zahnspange (Bracket).

Im Zusammenhang mit der vorliegenden Erfindung ist verschiedentlich von einem sogenannten Ultraschall-Aufnehmer 20 die Rede, der eine Sonde 11 umfasst. In Folgenden werden Beispiele für Ultraschall-Aufnehmer gegeben, die in erfindungsgemässen Vorrichtungen gemäß Anspruch 14 und Anlagen eingesetzt werden können.

Der Begriff Ultraschall deckt allgemein den Bereich zwischen 16 kHz - 1 GHz ab, wobei im Zusammenhang mit der Erfindung vorzugsweise im Bereich zwischen 1 MHz bis 80 MHz gearbeitet wird. Besonders bevorzugt ist bei Ultraschall-Wandlern, die im Impuls-Echo-Verfahren arbeiten der Bereich zwischen 40 MHz und 50 MHz, da in diesem Bereich eine gute Auflösung erzielt werden kann. Auch bevorzugt ist der Bereich zwischen 50 und 80 MHz, da die Dämpfung der Mittenfrequenz durch das Wasser oder Koppelmittel in diesem Bereich geringer ist. Generell kann die benötigte Ultraschall-Welle, ausser bei dem später erwähnten elektromagnetischen Ultraschall-Wandlern, piezoelektrisch erzeugt werden.

Man unterscheidet typischerweise zwischen Ultraschall-Aufnehmern, die longitudinal-Wellen und vertikal polarisierte Transversalwellen (Sv - Wellen) aussenden, und solchen Ultraschall-Aufnehmern, die horizontal polarisierte Transversalwellen (SH - Wellen) abgeben.

Diese longitudinal-Wellen können mit flüssigen oder gel-artigen Koppelmitteln zwischen der Sonde 11 (zum Beispiel in Form einer piezoelektrischen Sonde) und dem abzutastenden Material erzeugt werden.

Die horizontal polarisierte Transversalwellen (SH - Wellen) - wurden bisher seltener eingesetzt, da diese nur durch konventionelle Sonden, die sehr zähflüssige oder feste Koppelmittel benötigten, erzeugt wurden, was Prüfkopfbewegungen für die meisten Anwendungen unmöglich machte. Es bedarf also spezieller Koppelmittel wenn man mit Transversalwellen arbeitet, da Transversalwellen sich nämlich in Flüssigkeiten (wie zum Beispiel Wasser) so gut wie gar nicht ausbreiten können.

Die Vorrichtung, zeichnet sich dadurch aus, dass sich die eigentliche Sonde 11 während der Messung im Wesentlichen in Ruhe befindet, d.h. die Sonde 11 wird beim Ausführen der Messung nicht bewegt. Je nach Ausführungsform kann jedoch beim Initialisieren (zum Beispiel zum Einstellen/Nachführen des Abtastbereichs oder der Fokussierung) die Sonde 11 translatorisch in Richtung Ultraschall-Ablenkmittel 12 oder von diesen weg bewegt werden. Nach dieser Initialisierungsbewegung ruht die Sonde 11.

In einer speziellen Ausführungsform wird die Sonde wird durch eine Mikromechanik im Wesentlichen translatorisch in der Okklusalebene bewegt (2 Freiheitsgrade). Die Sonde selber kann zur Fokuseinstellung relativ zu einem Spiegel oder anderen Ablenkmittel bewegt werden. Der Spiegel kann kippbar ausgeführt sein, um Randbereiche besser erfassen zu können.

Durch die Konstellation, bei welcher die Sonde 11 bei der eigentlichen Messung keine und in einer Initialisierungsphase je nach Ausführungsform und Anwendung nur geringe translatorische Verschiebungen ausführt, kann nahezu jedes Koppelmittel verwendet werden. Es können daher sowohl Sonden eingesetzt werden, die longitudinal-Wellen abgeben, als auch solche, die Transversalwellen abgeben.

Besonders geeignet für den Einsatz sind Folienschwinger und Kompositschwinger, wobei die Folienschwinger gegenwärtig bevorzugt werden.

Das Prinzip der Erfindung wird im Folgenden anhand mehrerer Ausführungsformen beschrieben.

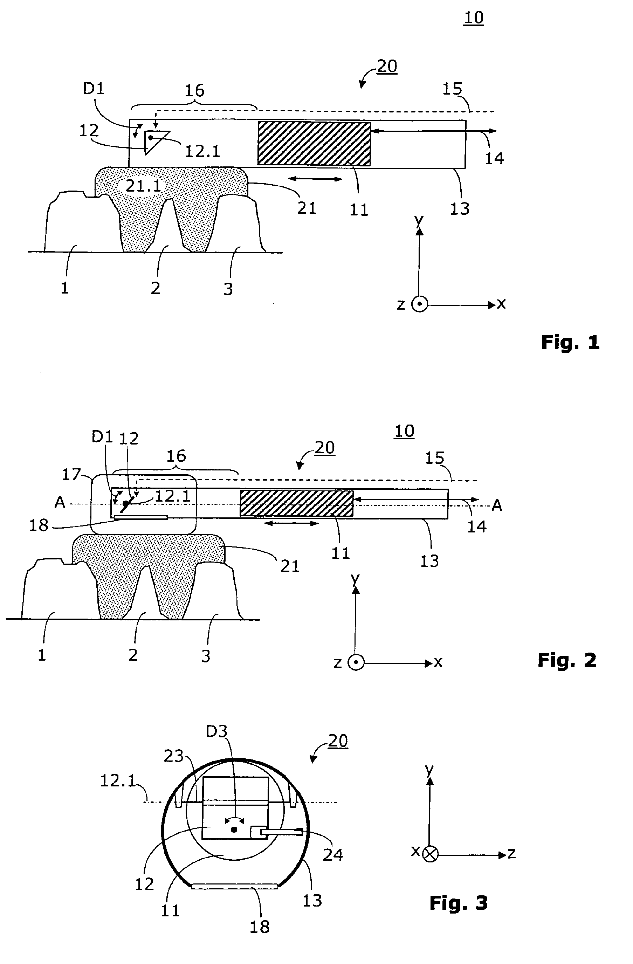

Eine erste Vorrichtung 10 zur Datenaufnahme im Mund eines Patienten ist in Fig. 1 schematisch angedeutet. Die Vorrichtung 10 umfasst einen Ultraschall-Aufnehmer 20, der im Schnitt gezeigt ist. Es sind Ultraschall-Ablenkmittel 12 vorgesehen, die aus der Distanz bewegbar sind, wie durch den gestrichelten Pfeil 15 angedeutet. Um den Ultraschall-Aufnehmer 20 schallmässig an den abzutastenden Zahnbereich 1, 2, 3 oder Restzahnbereich anzukoppeln, ist ein Ankopplungskörper 21 mit einem Ankoppelmittel 21.1 oder ein Dämpfungsmittel vorgesehen. Wie in Fig. 1 angedeutet, befindet sich der mit dem Ankoppelmittel 21.1 gefüllte, oder das Ankoppelmittel 21.1 umfassende Ankopplungskörper 21, bzw. das Dämpfungsmittel, zwischen dem Ultraschall-Ablenkmittel 12 und dem abzutastenden Zahnbereich 1, 2, 3 oder Restzahnbereich. Der Ankopplungskörper 21 umfasst vorzugsweise eine dünne, membranartige Hülle oder Wand, um das darin enthaltene Ankoppelmittel 21.1 zurückzuhalten. Als Ankoppelmittel 21.1 besonders geeignet sind gel-artige oder zähflüssige Mittel, die für die Ultraschallwellen im gewünschten Bereich akustisch transparent sind. Besonders bevorzugt ist Ultraschallgel oder AgarAgar als Ankoppelmittel. Da je nach Ausführungsform des Ankopplungskörpers 21 ein Teil des Ankoppelmittels 21.1 in den Mund des Patienten austreten kann, wird ein Ankoppelmittel bevorzugt, das im Falle des Verschluckens nicht gesundheitsschädigend ist.

Der Körper 21, welcher das weitere Ankoppelmittel 21.1 enthält oder umschliesst, kann vorzugsweise aus einem hochdämpfenden Material bestehen, um Artefakte durch ungewünschte Reflexionen zu minimieren.

Das Ultraschallablenkmittel 12 ist in einem Beispiel so ausgeführt, dass durch seine Form auch eine Fokussierung der Ultraschallwelle (analog zum einem Parabolspiegel) erzeugt wird.

In Fig. 1 sind drei benachbarte Zähne 1, 2 und 3 (auch als Zahnreihe bezeichnet) zu sehen, wobei der mittlere Zahn 2 (auch als Restzahnbereich bezeichnet) präpariert wurde, um später zum Beispiel eine Krone aufzunehmen. Die Gingiva ist nicht gezeigt.

Weiterhin sind Mittel vorgesehen (nicht in Fig. 1 gezeigt), um den Ultraschall-Aufnehmer 20 aus der Distanz mit Anregungssignalen zu beaufschlagen, wie in Fig. 1 durch den Doppelpfeil 14 angedeutet. Diese Mittel erlauben es auch die Ultraschall-Ablenkmittel 12 zu bewegen (siehe Pfeil 15). Durch die Anregung des Ultraschall-Aufnehmers 20 wird eine Ultraschallwelle erzeugt, die vom Ultraschall-Ablenkmittel 12 in Richtung des Zahnbereichs 1, 2, 3 oder Restzahnbereichs umgelenkt und/oder fokussiert wird. Dort wird mindestens ein Teil der Ultraschallwelle reflektiert und über das Ultraschall-Ablenkmittel 12 zurück in den Ultraschall-Aufnehmer 20 gekoppelt. Die rückläufige Ultraschallwelle wird auch als Echo bezeichnet. In diesem Fall arbeitet die Vorrichtung also im Impuls-Echo-Verfahren.

Wie in Fig. 1 gezeigt, sitzt die Sonde 11 samt Ultraschall-Ablenkmittel 12 in einem Gehäuse 13, respektive in einem entsprechenden Teil eines Gehäuses. Im Bereich zwischen dem Ultraschall-Ablenkmittel 12 und dem abzutastenden Zahnbereich 1, 2, 3 oder Restzahnbereich ist im Gehäuse eine Art Fenster vorgesehen, das mindestens für Ultraschallwellen durchlässig (d.h. akustisch transparent) ist. In Fig. 1 ist dieses Fenster nicht zu erkennen.

Durch eine geeignete Verarbeitung der elektrischen Anregungssignale und der elektrischen Signale, die vom Ultraschall-Aufnehmer 20 beim Empfang des Echos abgegeben werden (Reflektionssignale genannt), kann man Information über die Oberfläche zum Beispiel des präparierten Zahns 2 in Fig. 1 erhalten.

Bei dem in Fig. 1 gezeigten Beispiel ruht das Gehäuse 13, respektive der entsprechende Teil des Gehäuses in Bezug auf den abzutastenden Zahnbereich 1, 2, 3 oder Restzahnbereich. Dass heisst, weder das Gehäuse 13 noch die Sonde 11 führt während dem Abtasten eine Bewegung aus (ausser natürlich der Schwingungsbewegung, die durch die elektrischen Anregungssignale erzeugt wird). Je nach Grösse, Form und Art des abzutastenden Bereichs reicht es aus, wenn das Ultraschall-Ablenkmittel 12, in Fig. 1 ein kleiner prismatischer Körper, der in geeigneter Art und Weise verspiegelt ist, so eingestellt wird, dass der abzutastende Bereich von einer Ultraschallwelle erreicht wird, die von der Sonde 11 ausgeht und durch das Ultraschall-Ablenkmittel 12 umgelenkt wird. Die Auflösung, respektive Fokussierung kann zum Beispiel durch eine translatorische Verschiebung der Sonde 11 innerhalb des Gehäuses 13 erreicht werden. Diese Verschiebung ist in Fig. 1 durch einen Doppelpfeil unterhalb der Sonde 11 angedeutet. Durch eine solche Verschiebung verändert sich der Abstand zum Ultraschall-Ablenkmittel 12 und dadurch wird der Wellenverlauf verändert. Alternativ oder zusätzlich kann der Abstand zwischen der Sonde 11 und dem Ultraschall-Ablenkmittel 12 auch auf andere Art und Weise verändert werden.

Eine Fokussierung kann auch durch eine geeignete Form der Ultraschall-Ablenkmittel 12, abweichend von der des Prismas, erreicht werden.

In einer gegenwärtig bevorzugten Ausführungsform der Erfindung wird das Ultraschall-Ablenkmittel 12 während dem Abtastvorgang mindestens um eine Achse gekippt oder gedreht. In Fig. 1 ist ein Beispiel angedeutet, bei der eine Drehung nur um eine Achse, nämlich die sogenannte Spiegelachse 12.1 (diese Spiegelachse 12.1 steht senkrecht zur Zeichenebene) erfolgt.

Diese Kippbewegung ist durch einen Doppelpfeil D1 angedeutet. Durch eine solche kontrollierte Kippbewegung kann die Ultraschallwelle auch die benachbarten Zähne 1 und 3 zumindest teilweise erfassen.

In einer gegenwärtig bevorzugten Ausführungsform der Erfindung wird eine Kippung/Drehung des Ultraschall-Ablenkmittels um zwei Achsen vorgesehen, um die Zähne von allen Seiten abtasten zu können.

Ein weiteres Beispiel ist in Fig. 2 gezeigt. Es werden dieselben Bezugszeichen für gleichartige oder gleichartig wirkende Elemente verwendet. Dies gilt auch für alle anderen Beispiele des Ultaschall-Aufnehmers. Da dieses Beispiel auf das in Fig. 1 gezeigte Beispiel aufbaut, respektive eine Variante desselben ist, wird nur auf die wesentlichen Unterschiede eingegangen.

Die Sonde 11 sitzt samt der Ultraschall-Ablenkmittel 12 in einem länglichen, stabförmigen Gehäuse 13, respektive Gehäuseteil. Die Sonde 11 kann eine translatorische Verschiebung innerhalb des Gehäuses 13 ausführen, wie in Fig. 2 durch einen Doppelpfeil unterhalb der Sonde 11 angedeutet. Als Ultraschall-Ablenkmittel 12 dient eine kleine Spiegelfläche, die um eine Spiegelachse 12.1 (diese Spiegelachse 12.1 steht senkrecht zur Zeichenebene) drehbar ist. Diese Kippbewegung ist durch einen Doppelpfeil D1 angedeutet. Auf der Ausrespektive Eintrittsseite des Gehäuses 13 ist eine Membrane 18 als Ultraschallfenster vorgesehen. Der Kopfbereich des Gehäuses 13 ist mit einem optionalen Körper 17 umgeben, der als Koppelelement dient.

In dem gezeigten Beispiel hat zumindest das Äussere des Gehäuses 13 und der Körper 17 eine rotationssymmetrische Form im Bezug auf die Längsachse A-A. Zusätzlich zu der Einstellbarkeit der Auflösung, respektive Fokussierung durch eine Veränderung des Abstands zwischen der Sonde 11 und dem Spiegel 12, kann einerseits durch das Schwenken des Spiegels 12 um die Spiegelachse 12.1 ein Bereich in x-Richtung mit einer Ultraschallwelle überstrichen werden. Falls eine weitere Dreh- oder Schwenkachse für das Ultraschall-Ablenkmittel 12 vorgesehen ist, so kann auch eine Ablenkung der Ultraschallwelle in z-Richtung erfolgen. Man erhält in diesem Fall also auch Seitenansichten der abzutastenden Zähne 1, 2, 3.

Um in einer Ausführungsform, die nur einer Spiegelachse 12.1 aufweist, zum Beispiel auch Seitenansichten (die im Wesentlichen in der x-y Ebene liegen) des Zahnes 2 zu bekommen, kann man den Ultraschall-Aufnehmer 20 um die Längsachse A-A drehen.

Durch eine geeignete Kombination verschiedener Dreh- und Schwenkbewegungen kann man grössere Bereiche von verschiedenen Seiten her erfassen, ohne die Sonde 11 an sich während dem Abtastvorgang verschieben oder kippen zu müssen, wie dies im eingangs genannten US-Patent 6,050,821 der Fall ist.

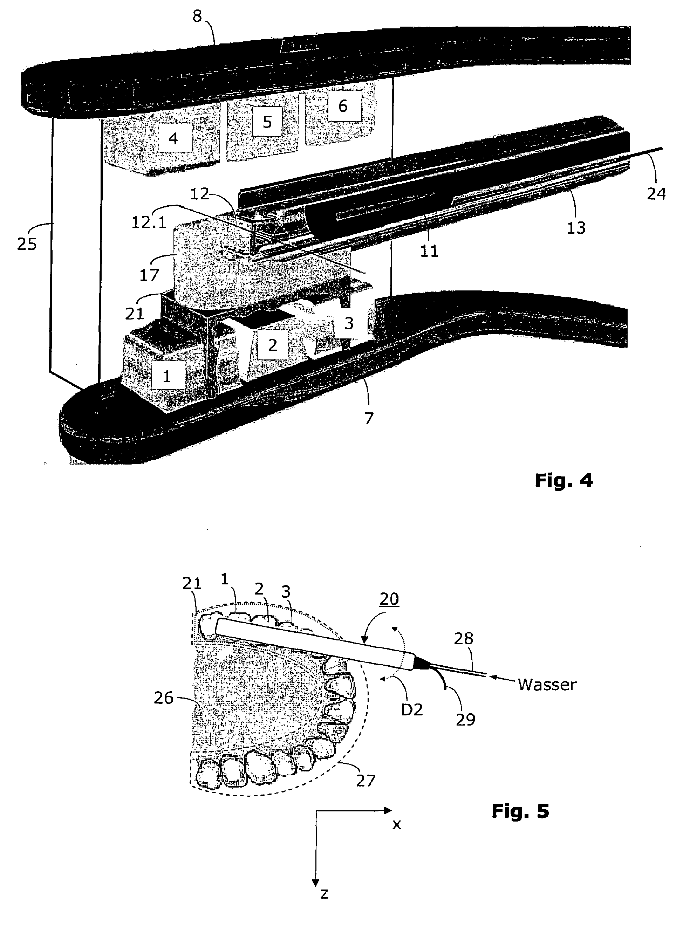

In einer gegenwärtig bevorzugten Ausführungsform der Erfindung ist die gesamte Vorrichtung 10, oder ein Teil derselben, auch in der x/z Ebene motorisch gesteuert positionierbar, um z.B. einen Okklusalscan durchführen zu können. In Fig. 5 ist diese optionale x/z-Bewegung durch den Doppelpfeil D2 angedeutet.

Besonders bevorzugt ist eine Ausführungsform, die mit folgenden 5 Freiheitsgraden arbeitet, aber auf dem bisher besprochenen Prinzip beruht:
- translatorische Bewegung der Sonde 20 in x und z Richtung;
- translatorische Verstellung der Sonde 20 zur Variation des Sondenfokus;
- rotatorische Verstellung der Ablenkmittel 12 (um 2 Rotationsachsen).

Ein weiteres Beispiel ist in Fig. 3 als schematische Schnittdarstellung gezeigt. Der Schnitt verläuft durch den Kopfbereich des Ultraschall-Aufnehmers 20. Das Gehäuse 13 hat im geschnittenen Bereich einen kreisförmigen Querschnitt, der an der unteren Seite abgeflacht ist. Im Bereich der Abflachung sitzt eine akustisch transparente Membrane 18. Eine Spiegelfläche 12 dient als Ultraschall-Ablenkmittel, das um eine Spiegelachse 23 (diese Spiegelachse liegt in der Zeichenebene) drehbar ist. Die Achse 23 verläuft parallel zur z-Richtung, wie durch das Bezugszeichen 12.1 angedeutet. Im gezeigten Beispiel setzt an der unteren rechten Ecke der Spiegelfläche 12 ein Gestänge 24, oder ein gleichwirkendes Mittel an, das durch eine Bewegung in x-Richtung die Spiegelfläche 12 um die Achse 23 kippt. Das Gestänge 24 kann entlang des Gehäuses 13 an der Innenseite vom Kopfbereich bis zum Ende hin verlaufen, um so ausserhalb des Patientenmundes betätigbar zu sein. Diese externe Betätigung der Ultraschall-Ablenkmittel 12 ist in den bisher besprochenen Figuren 1 und 2 nur durch den gestrichelten Pfeil 15 schematisch angedeutet. In Fig. 3 hingegen ist ein konkretes Realisierungsbeispiel für einen entsprechenden Betätigungsmechanismus gezeigt.

Die Spiegelachse 23 ist, wie angedeutet, rechts und links oben im Gehäuse 13 aufgehängt. In x-Richtung gesehen hinter der Spiegelfläche 12 ist die Austrittsseite der Sonde 11 zu erkennen.

Der Ultraschall-Aufnehmer 20 kann um die Längsmittelachse AA (in Fig. 3 durch einen schwarzen Punkt im Symmetriezentrum angedeutet) gedreht werden, wie durch den Doppelpfeil D3 angedeutet.

Besonders vorteilhaft ist eine sogenannte Wasserankopplung zwischen der Sonde 11, dem Ultraschall-Ablenkmittel 12 und dem Fenster, respektive der Membrane 18. Eine solche Wasserankopplung kann durch das Befüllen des Gehäuses 13 mit Wasser (oder einer ähnlich gearteten Flüssigkeit) erreicht werden. Besonders bevorzugt sind Flüssigkeiten, die akustisch im gewünschten Wellenlängenbereich transparent sind, d.h., die einen niedrigen akustischen Widerstand haben. Besonders bevorzugt ein System mit einer aufeinander abgestimmten Auswahl von Flüssigkeit und Koppelmittel, damit die Grenzfläche zwischen der Flüssigkeit und dem Koppelmittel "akustisch transparent" ist.

In einer gegenwärtig bevorzugten Ausführungsform der Erfindung strömt permanent Wasser durch den in Fig. 1 und Fig. 2 mit 16 gekennzeichneten Kopfbereich. Vorzugsweise wird das Wasser durch einen Schlauch von ausserhalb des Mundes zugeführt. Besonders bevorzugt ist eine Ausführungsform bei welcher die Zuführung durch das Gehäuse 13 hindurch erfolgt. Alternativ kann Wasser, oder eine andere geeignete Flüssigkeit auch einfach nur im Inneren vorhanden sein, ohne zu strömen.

Details einer Ausführungsform der Erfindung sind in Fig. 4 gezeigt. Es handelt sich um eine perspektivische, schematisierte Ansicht eines erfindungsgemässen Ultraschall-Abnehmers 20 im Mund eines Patienten. Es werden dieselben Bezugszeichen für gleichartige oder gleichartig wirkende Elemente verwendet. Der Übersichtlichkeit halber sind nur ein Teil der unteren Gingiva 7 und der oberen Gingiva 8 mit jeweils nur drei Zähnen 1, 2, 3, respektive 4, 5 und 6 gezeigt. Gemäss Erfindung kommt eine sogenannte Stützstruktur zum Einsatz, die in Fig. 4 mit dem Bezugszeichen 25 gekennzeichnet ist. Im gezeigten Beispiel handelt es sich um eine Stützstruktur 25, die zwischen dem Ober- und Unterkiefer eingeklemmt und fixiert wird. Die Stützstruktur 25 kann ähnlich ausgeführt werden wie ein Bisseinsatz, der beim Aufnehmen von Röntgenbildern zwischen Ober- und Unterkiefer eines Patienten eingeklemmt wird, um den Röntgenfilm zu halten.

In einer gegenwärtig bevorzugten Ausführungsform der Erfindung wird eine Art Gebissschiene oder -löffel als Stützstruktur eingesetzt, die vor der Datenaufnahme an oder auf den Zähnen im Mund des Patienten platziert wird. Diese Gebissschiene oder der Löffel ist vorzugsweise im Wesentlichen in sich fest, im Sinne von nicht-elastisch. Besonders bevorzugt sind Stützstrukturen, die akustische Wellen absorbieren, um somit Störechos unterdrücken zu können.

Ein entsprechendes Beispiel mit einer Gebissschiene oder -löffel als Stützstruktur ist in Fig. 5 gezeigt. In dieser Figur sind die Zähne des Unterkiefers 26 gezeigt. Der Ultraschall-Aufnehmer 20 wird in einem Gebisslöffel 27 gelagert, der als Stützstruktur dient. In Fig. 5 ist der Gebisslöffel 27 transparent gezeigt, um die darunter liegenden Zähne nicht zu verdecken. Am äusseren Ende des Ultraschall-Aufnehmers 20 ist ein dünner Schlauch 28 zu erkennen, durch den Wasser in den Ultraschall-Aufnehmer 20 gespeist werden kann. Bei Ausführungsformen, die ohne Wasserspülung arbeiten, kann dieser Schlauch 28 entfallen. Die Sonde 11 und die Ultraschall-Ablenkmittel 12 werden durch Signale angesteuert, die durch ein mehradriges Kabel 29 geführt werden. Durch die gezeigte Anordnung können problem- und fehlerlos die Zähne 1, 2 und 3 erfasst werden, ohne dass man den Ultraschall-Aufnehmer 20 relativ zu den besagten Zähnen während des eigentlichen Abtastvorgangs bewegen muss.

Vorzugsweise ist eine motorische Verstellbarkeit der Lage des Ultraschall-Aufnehmers 20 in Bezug auf den Gebisslöffel 27 in der x-z-Ebene (und damit auch relativ zu den abzutastenden Zähnen) gegeben, wie durch den Doppelpfeil D2 angedeutet.

Durch Schliessen des Kiefers kann die Stützstruktur 25 (respektive 27) für die Dauer des Abtastvorgangs ruhig gehalten werden, was für die Abtastgenauigkeit aber auch die Reproduzierbarkeit der Messungen wichtig ist.

Erfindungsgemäß wird durch die Stützstruktur 25 (respektive 27) eine feste (definierte) Position des Ultraschall-Aufnehmers 20 in Bezug auf den Zahnbereich 1, 2 ,3 oder Restzahnbereich vorgegeben und dadurch eine Relation zu einer Bukkal-, Labial-, Lingual- und/oder Okklusalfläche eines Zahnes definiert.

Wie in Fig. 4 angedeutet, ist der Ultraschall-Abnehmer 20 mechanisch mit der Stützstruktur 25 (oder dem Gebisslöffel 27 in Fig. 5) verbunden. Analog zu Fig. 1 dient ein kleiner prismatischer Körper 12 als Ultraschall-Ablenkmittel, der um die Achse 12.1 geschwenkt werden kann. Die Schwenkbewegung wird durch ein Gestänge 24, oder ein ähnliches Mittel bewirkt. Wie in Fig. 4 angedeutet, wird das Gestänge 24 zum Ende des Ultraschall-Abnehmers 20 geführt und kann dort zum Beispiel von einem Aktuator, Motor oder einem ähnlich wirkenden Mittel betätigt werden. Statt eines elektro-motorischen Antriebs kann zum Beispiel auch ein hydraulischer Antrieb verwendet werden.

Besonders bewährt hat es sich die Ultraschall-Ablenkmittel 12 mittels hybrider, kinematischer Mittel zu bewegen, um den gewünschten (Zahn-)Bereich mit einer Ultraschallwelle zu überstreichen.

Die Vorrichtung 10 umfasst vorzugsweise ein Gehäuse 13, das anatomisch an die Gegebenheiten im Mund eines Patienten angepasst ist. Besonders bevorzugt ist ein längliches, zylinderförmiges Gehäuse 13. In sich geschlossene Gehäuse werden bevorzugt, da sie einfacher desinfizierbar und daher mehrfach einsetzbar sind.

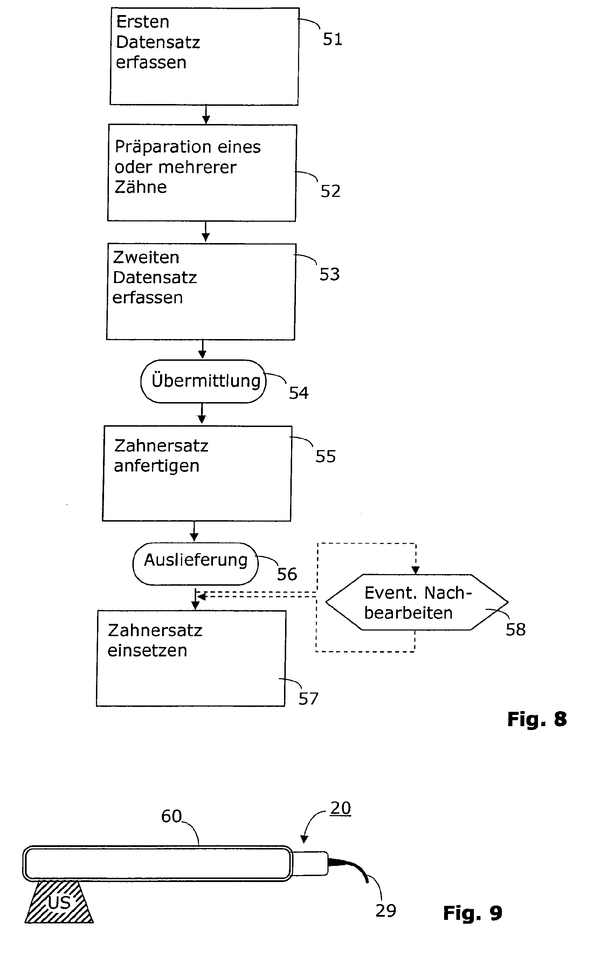

In einer weiteren Ausführungsform wird über das Gehäuse 13 eine dünne Folie oder ein dünner Gummi 60 gezogen, die/das steril ist, bevor das Gehäuse in den Mund gebracht wird. Diese Folie oder dieses Gummi 60 kann als Membrane 18 dienen. Bevorzugt ist eine Folie oder ein Gummi 60, das elastisch ist. Ein entsprechendes Ausführungsbeispiel ist in Fig. 9 gezeigt. Es handelt sich bei der in Fig. 9 gezeigten Vorrichtung um eine Sonde 20, die mit Wasser oder einer anderen Flüssigkeit befüllt ist (d.h. keine Schlauchanbindung braucht) und Signale über das Kabel 29 empfängt und abgibt. Ultraschallwellen (US) werden durch die Gummihülle 60 hindurch abgegeben, wie in Fig. 9 schematisch angedeutet.

In einer weiteren Ausführungsform wird in dem Gehäuse 13 eine Ultraschallquelle und ein separater Ultraschallempfänger eingesetzt. Diese Ausführungsform lässt sich mit allen anderen genannten Ausführungsformen kombinieren.

Bei einer weiteren Ausführungsform umfasst der Ultraschall-Aufnehmer 20 einen Gruppenstrahler mit mindestens zwei Sende- und zwei Empfangselementen, die vorzugsweise linear als Array angeordnet sind.

In einer weiteren Ausführungsform sind die Ultraschall-Ablenkmittel 12 so gelagert und bewegbar (zum Beispiel um 2 Achsen), dass sie entlang einer vorgegebenen Raumkurve schwenkbar sind. Damit kann man zum Beispiel spezielle Bereiche eines Zahnes oder von mehreren Zähnen besser abtasten.

Besonders geeignet als Ultraschall-Ablenkmittel 12 sind mikromechanische Spiegel aus Silizium, die durch das Anlegen von elektrischen Steuersignalen bewegt werden können.

Die Vorrichtung 20 kann so ausgelegt sein, dass eine Wiedergabe des erfassten Zahn- oder Restzahnbereichs in schwarz-weiss oder in Farbe erfolgt.

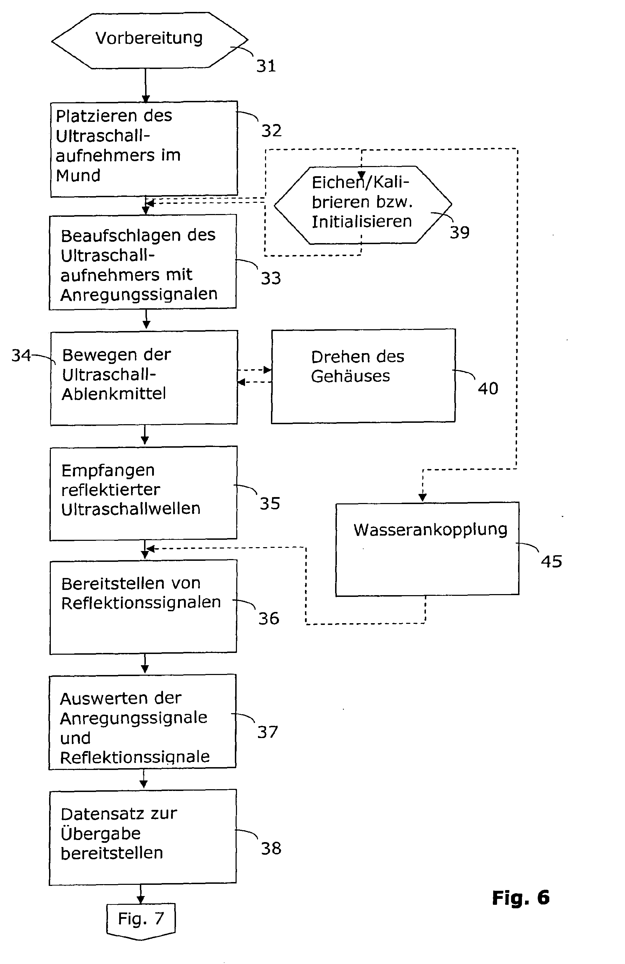

Nachdem nun die Grundlagen der Erfindung erläutert und verschiedene Ausführungsformen beschrieben worden sind, wird im Folgenden das entsprechende Verfahren zur Datenaufnahme im Mund eines Patienten mit einem Ultraschall-Aufnehmer 20 beschrieben. In diesem Zusammenhang wird auf Fig. 6 Bezug genommen, die einige der wesentlichen Verfahrensschritte als Flussdiagramm wiedergibt.

Bevor der Ultraschall-Aufnehmer 20 im Mund des Patienten platziert werden kann, erfolgen gewisse Vorbereitungsschritte, wie in Fig. 6 durch das Bezugszeichen 31 angedeutet. Im Rahmen dieser Vorbereitung kann zum Beispiel ein Körper 17 und/oder Ankopplungskörper 21 (zum Beispiel ein Gelkörper), oder ein Dämpfungsmittel, im Mund des Patienten oder an der Stützstruktur 25 angeordnet werden. Bei einer Ausführungsform, die ein Art Gebissschiene oder -löffel 27 als Stützstruktur einsetzt, kann zum Beispiel ein Gel als Ankopplungsmittel in die Gebissschiene oder den Löffel 27 eingebracht werden. In Fig. 4 ist der mit Gel gefüllte Ankopplungskörper mit dem Bezugszeichen 21 gekennzeichnet. Der Ankopplungskörper 21 und/oder das Gel füllt einen Teil des Löffels 27.

Dann wird im Schritt 32 der Ultraschall-Aufnehmer 20 samt Stützstruktur 25 (respektive Löffel 27) in den Mund des Patienten gebracht und dort fixiert. Die Fixierung kann zum Beispiel durch Zubeissen oder Schliessen der Kiefer erfolgen. Die Vorrichtung 20 kann aber auch mit einem Headgear (wie sie von Kieferorthopäden eingesetzt werden) temporär am Kopf des Patienten befestigt werden. Anschliessen kann zum Beispiel ein optionaler Eich- oder Initialisierungsschritt 39 erfolgen. Im Rahmen dieses Schritts kann zum Beispiel die Auflösung, respektive die Fokussierung durch translatorisches Verschieben der Sonde 11 im Gehäuse 13 eingestellt werden, oder es können andere Einstellbewegungen vorgenommen werden.

Nun wird der Ultraschall-Aufnehmer 20 mit elektrischen Anregungssignalen beaufschlagt (Schritt 33), um eine Ultraschallwelle abzugeben, und es wird das Ultraschall-Ablenkmittel 12 bewegt (Schritt 34), um den abzutastenden Bereich mit der ausgesandten Ultraschallwelle zu überstreichen (dieser Vorgang wird hier auch als Scan-Bewegung bezeichnet). Die Bewegung der Ultraschall-Ablenkmittel 12 kann, muss aber nicht zeitgleich mit dem Anregen der Sonde 11 erfolgen.

Wird nur das Ablenkmittel 12 bewegt, so kann die Wellenfront entlang der x-Achse bewegt werden, oder mit anderen Worten ausgedrückt wird durch diese Bewegung die Wellenfront um eine Achse geschwenkt, die parallel zur z-Achse verläuft. Falls weitere Achsen vorhanden sind, so kann auch um diese Achsen eine Bewegung der Ablenkmittel 12 und damit eine entsprechend Ablenkung der Wellenfront erfolgen.

Je nach Ausführungsform der Erfindung und Einsatzzweck kann nun gleichzeitig zum Schritt 34, und/oder anschliessend das Gehäuse 13, oder ein Teil des Gehäuses, gedreht werden (Schritt 40), um auch in eine andere Richtung die Abtastung "aufzuweiten". Dies kann man machen, um so zum Beispiel auch bukkale und labiale Zahnflächen (besser, respektive genauer) erfassen zu können. Statt dieser mechanischen Drehung des Gehäuses kann diese "Aufweitung" bei entsprechende Ausführung der Ablenkmittel 12 durch eine geeignete Bewegung derselben erreicht werden. Es kann aber auch, wie in Fig. 5 angedeutet, eine Bewegung in der x-z-Ebene erfolgen.

Je nach Bewegung des Ultraschall-Ablenkmittels 12 und/oder des Gehäuses 13 kann eine Abtastung des Zahnbereichs 1, 2, 3 oder des Restzahnbereichs parallel zu einer Zahnreihe und/oder senkrecht zu der Zahnreihe erreicht werden.

Die reflektierten Ultraschallwellen werden mindestens zum Teil wieder in das Gehäuse 13 zurück geführt und dort empfangen (Schritt 35). Der Ultraschall-Aufnehmer 20 stellt entsprechende elektrische Reflektionssignale bereit (Schritt 36), die dann im Schritt 37 zusammen mit den Anregungssignalen verarbeitet werden, um so eine Aussage über die Oberfläche zum Beispiel eines Zahns 2 zu ermöglichen.

Im gezeigten Beispiel stellt die Vorrichtung 10 dann einen Datensatz zur Verfügung, der an ein anderes System übergeben werden kann, oder der weiterverarbeitet werden kann (Schritt 38).

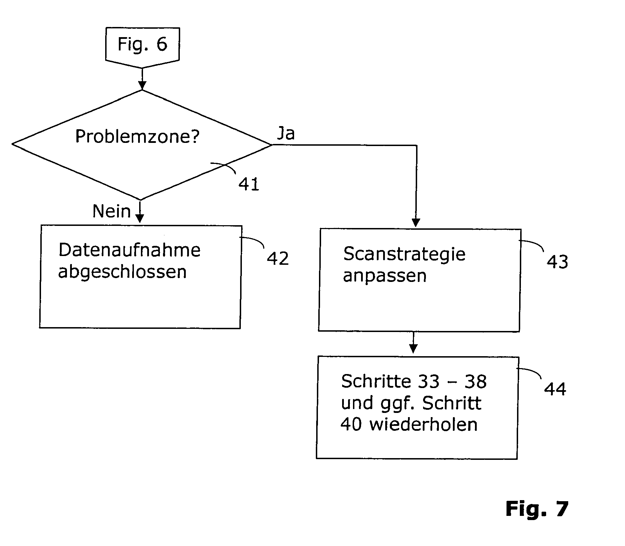

An diese Schritte anschliessende Schritte werden in Fig. 7 gezeigt.

Die erfindungsgemäss Vorrichtung 10 und die entsprechende Scanstrategie können so erweitert werden, dass dann zusätzliche Scannebenen zum Einsatz kommen, wenn es um die Erhöhung der Informationsdichte für die Darstellung von Kanten und/oder schrägen Flächen und/oder Übergängen und/oder abgeschatteten Bereichen, und/oder Hinterschneidungen, und/oder toten Winkeln oder anderen Problemzonen geht. In diesem Fall sieht die Scanstrategie vor, dass in einem ersten Ansatz der relevante Bereich in einem Grobscan (auch als Übersichtsscan bezeichnet) erfasst wird. Bei der Auswertung des anfallenden Datensatzes ermittelt ein entsprechendes Softwaremodul ob Kanten, schrägen Flächen, Übergänge, Abschattung, Hinterschneidungen, tote Winkel oder andere Problemzonen vorhanden sind. Dies ist in Fig. 7 als Schritt 41 bezeichnet. Ist dies der Fall, so wir die Scanstrategie entsprechend automatisch angepasst (Schritt 43) und es werden zusätzliche Aufnahmen gemacht, die weitere Datensätze liefern können. Dieser Vorgang wird in Fig. 7 als Schritt 44 zusammengefasst.

Im Rahmen der zusätzlichen Aufnahmen kann je nach Art der Problemzone die Auflösung erhöht, die Stellung und/oder Bewegung der Ultraschall-Ablenkmittel 12 geändert, oder der Ultraschall-Aufnehmer 20 verdreht oder anders positioniert werden.

Besonders bewährt hat sich eine Scanstrategie, bei der in einem ersten Durchlauf der relevante Bereich mit einem Grobscan erfasst wird. Dann folgt ein genauerer Durchgang mit höherer Auflösung. Dieser genauere Scan kann zum Beispiel nur den präparierten Zahn 2 abdecken während beim Grobscan alle Zähne 1, 2 und 3 erfasst werden. Im Rahmen der Auswertung werden dann die entsprechenden Datensätze automatisch so zusammen geführt, dass ein Gesamtabbild entsteht, bei dem der Bereich des Zahnes 1 mit grösserer Auflösung vorliegt. Das Zusammenführen erfolgt automatisch (d.h. nichtmanuell) mittels 3D-Matching.

Falls die Auswertung respektive Verarbeitung eines Datensatzes ergibt, dass keine Problemzonen vorliegen, so kann die Datenaufnahme abgeschlossen werden, wie in Fig. 6 durch den Schritt 42 angedeutet.

Je nach Ausführungsform der Vorrichtung 10 kann in einem optionalen Schritt 45 eine Wasserankopplung erfolgen. In Fig. 6 ist die Wasserankopplung so dargestellt, dass sie beginnt bevor der Schritt 33 ausgeführt wird und mindestens solange aufrecht erhalten bleibt bis die reflektierten Ultraschallwellen empfangen wurden. Mit anderen Worten ausgedrückt, erfolgt die Wasserankopplung mindestens während einem Teil der Verfahrensschritte. Bei der Wasserankopplung wird Wasser in den Ultraschall-Aufnehmer 20 eingespeist, um für eine Wasserankopplung des Senders/Empfängers des Ultraschall-Aufnehmers 20 zu sorgen.

Gemäss einem weiteren Verfahren, das in Fig. 8 dargestellt ist, werden zum Beispiel vom Zahnarzt zwei Datensätze aufgenommen. Ein erster Datensatz wird in einem ersten Schritt 51 aufgenommen bevor der oder die Zähne im Mund des Patienten in einem zweiten Schritt 52 bearbeitet werden. Dieser erste Datensatz hält quasi die Ist-Situation fest. Nun erfolgt zum Beispiel die Präparation eines Zahnes durch Abschleifen (Schritt 52). Nachdem die Präparation abgeschlossen ist, kann mit der erfindungsgemässen Vorrichtung erneut eine Aufnahme gemacht werden (Schritt 53). Im Rahmen dieser Aufnahme wird ein zweiter Datensatz ermittelt, der mindestens den präparierten Zahn umfasst.

Einer oder beide Datensätze können nun verwendet werden, um eine Krone oder ein anderes Zahnersatzteil zu erstellen. Zum Beispiel können die Daten an ein Fräszentrum oder Labor gesandt werden, zum Beispiel nach Übermittlung per E-Mail (Schritt 54), damit dort die Krone gefertigt werden kann (Schritt 55). Anhand des zweiten Datensatzes kann die Form des Kontaktbereichs zwischen dem präparierten Zahn und dem Inneren der Krone ermittelt und hergestellt werden. Der erste Datensatz kann zum Beispiel verwendet werden, wenn es darum geht die äussere Form der Krone zu erzeugen. Nachdem das Zahnersatzteil (z.B. in Form einer Krone) gefertigt wurde, wird diese an den Zahnarzt ausgeliefert (Schritt 56). Dieser setzt dann den Zahnersatz beim Patienten ein (Schritt 57). Typischerweise erfolgt in diesem Zusammenhang eine Nachbearbeitung, wie in Fig. 8 als Schritt 58 angedeutet. Im Rahmen der Nachbearbeitung kann dem Zahnersatzteil durch Schleifen, Polieren oder anderes Bearbeiten die endgültige Form gegeben werden. Es kann zum Beispiel auch die Farbgebung geändert werden.

Die beschriebenen Verfahren können aber auch zur Diagnose eingesetzt werden. In diesem Fall wird mittels der Ultraschallwellen ein zu untersuchender Bereich zu Diagnosezwecken erfasst und das Ergebnis angezeigt oder ausgedruckt. Der behandelnde Arzt kann dann die Anzeige oder den Ausdruck auswerten, um eine geeignete Behandlung festzulegen. Mit der Vorrichtung 10 kann man zum Beispiel kariöse Stellen an Zähnen oder Zahnstein aufgrund des unterschiedlichen Reflektionsverhaltens auffinden. Es können aber auch Risse, Absplitterungen oder dergleichen angezeigt werden.

Vorzugsweise kommt eine Auswerteeinheit zum Einsatz, die so ausgelegt ist, dass sie eine Geometrieermittlung des Zahnbereichs oder des Restzahnbereich ausführen kann. Besonders bevorzugt ist eine Ausführungsform, bei der ein Datensatz durch eine spezielle Software verarbeitet wird, um die Geometrie des Zahnbereichs oder des Restzahnbereichs zu ermitteln. Die Auswerteeinheit kann auch oder zusätzlich eine Punktewolke ermitteln, welche die Oberfläche des Zahnbereichs oder des Restzahnbereich repräsentiert. Zusätzlich oder alternativ kann die Auswerteeinheit anhand des Datensatzes die Topographie mindestens eines Teils des Zahnbereichs oder des Restzahnbereich ermitteln.

Die Auswerteeinheit kann aber auch so ausgelegt sein, dass sie den Datensatz bearbeitet, um einen 3D-Datensatz zu ermitteln, der als 3D-Oberflächenmodell des Zahnbereichs oder des Restzahnbereich einsetzbar ist.

In einer weiteren Ausführungsform werden neben den direkt reflektierten Schallwellen auch Streuwellen empfangen, verarbeitet und ausgewertet.

Die Erfindung kann problemlos sowohl für das Erfassen im Frontzahnbereich, als auch im hinteren molaren Bereich eingesetzt werden.

Es können gemäss Erfindung auch (künstliche) Kavitäten in einem Zahn erfasst werden, um zum Beispiel ein geeignetes Inlay anzufertigen.

In einer weiteren Ausführungsform wird die Erfindung im Zusammenhang mit einer Vorrichtung gemäss dem Europäischen Patent EP 0 913 130 B1 eingesetzt, wobei die in der genannten Patentschrift beschriebene Vorrichtung zum Scannen bereits (vor)bearbeiteter Zahnersatzteile (zum Beispiel im Labor) eingesetzt wird und die erfindungsgemässe Vorrichtung 10 selbst am Patienten zur Datenaufnahme zum Einsatz kommt.

Die Erfindung kann auch besonders vorteilhaft im Zusammenhang mit dem in der europäischen Patentanmeldung EP 1 062 916 beschriebenen Verfahren bei der Herstellung von implantatgestütztem Zahnersatz angewendet werden.

Mit der Erfindung können eine oder mehrere der folgenden Elemente bearbeitet, hergestellt oder deren Bearbeitung oder Herstellung unterstützt werden:
- entnehmbarer oder festsitzender Zahnersatz;
- ein Kronengerüst;
- ein Brückengerüst;
- eine Implantat-Suprakonstruktion;
- eine Zahnspange;
- einen entnehmbaren oder festsitzenden Zahnersatz, oder
- ein anderes kieferorthopädisches Element.

Die Vorteile der Erfindung sind im Folgenden zusammenfassend dargelegt, wobei je nach Ausführungsform gewisse Aspekte an Bedeutung gewinnen oder weniger ausgeprägt sind. Die Anwendung der Erfindung ist vollkommen ungefährlich sowohl für den Patienten als auch für den Zahnarzt und andere Beteiligte. Das Verfahren kann beliebig häufig wiederholt werden, und eignet sich daher auch für Studien und dergleichen. Das Verfahren ist nicht-invasiv und absolut schmerzlos. Im Vergleich zu herkömmlichen Verfahren wird die Behandlungszeit deutlich reduziert und Fehlerquellen werden weitestgehend ausgeschlossen.

Durch den Einsatz der Erfindung kann man auf teure Abformungsmaterialien verzichten, was Kosten einspart und die Umwelt schont. Das Verfahren ist auch weit weniger fehlerbehaftet als bisher bekannte Ansätze. Ausserdem sind die Aufnahmezeiten sehr kurz, was die Produktivität steigert.

Im Vergleich zu bisherigen Ansätzen ist die Vorrichtung, bzw. die gesamte Anlage, preisgünstig. Das gilt besonders dann, wenn eine einzige Sonde als Sender/Empfänger zum Einsatz kommt. Dadurch wird die Anwendung kosteneffizienter.

Die Erfindung hat somit sowohl gegenüber der konventionellen Abformtechnik als auch im Vergleich zur CCD-basierten intraoralen Datenaufnahme entscheidende Vorteile.

Die erfindungsgemässe Vorrichtung kann auch besonders vorteilhaft im Zusammenhang mit der Diagnose eingesetzt werden, wie bereits erwähnt. So kann man zum Beispiel, je nach Vorgabe der Parameter (Ultraschallfrequenz, etc.) die Zahnoberfläche abtasten, um Risse, Absplitterungen; Zahnstein oder Paradentose festzustellen.

Es ist ein Vorteil der erfindungsgemässen Vorrichtung, dass sie keinerlei Mittel braucht, um die Position des Ultraschall-Aufnehmers im Mund des Patienten, oder in Bezug auf abzutastende Zähne, zu ermitteln. Die Vorrichtung ist mit anderen Worten ausgedrückt autark und es braucht keine Hilfssysteme oder dergleichen.

Ein weiterer Vorteil der Erfindung liegt darin, dass die wesentlichen mechanischen/technischen und elektrischen Teile in einem Gehäuse 13 oder einem Teil eines Gehäuses untergebracht sind. Das macht die ganze Anordnung besonders robust und unempfindlich. Ausserdem ist die Vorrichtung besonders gut zu reinigen und desinfizieren. Auch kann es kaum zu Beschädigungen kommen. Die Vorrichtung ist sehr viel kostengünstiger als einige der vorbekannten Lösungen, da sie nur eine Sonde braucht anstatt der üblichen Sonden-Arrays.

### Bezugszeichenliste:

Zahnbereich 1, 2, 3
Zähne 1, 2 und 3
Zähne 4, 5 und 6
Gingiva 7
Vorrichtung 10
Sonde 11
Ultraschall-Ablenkmittel 12
Drehachse 12.1
Gehäuse 13
Doppelpfeil 14
Pfeil 15
Kopfbereich 16
(Dämpfungs)Körper 17
Membrane 18
Ultraschall-Aufnehmer 20
Ankopplungskörper 21
Achsrichtung 22
Spiegelachse 23
Gestänge 24
Stützstruktur 25
Unterkiefer 26
Gebisslöffel 27
Schlauch 28
Kabel 29
Vorbereitungsschritt 31
Schritt 32
Schritt 33
Schritt 34
Schritt 35
Schritt 36
Schritt 37
Schritt 38
Eich- oder Initialisierungsschritt 39
Schritt 40
Schritt 41
Schritt 42
Schritt 43
Schritt 44
optionaler Schritt 45
Schritt 51
Schritt 52
Schritt 53
Schritt 54
Schritt 55
Schritt 56
Schritt 57
Schritt 58

60 Folie/Hülle

## Patentansprüche

1. Verfahren zur Datenaufnahme im Mund eines Patienten mittels eines Ultraschall-Aufnehmers (20), wobei der Ultraschall-Aufnehmer (20) Ultraschall-Ablenkmittel (12) und eine Stützstruktur (25, 27) zum Halten des Ultraschall-Aufnehmers (20) umfasst, wobei die folgenden Schritte ausgeführt werden:
• Platzieren der Stützstruktur (25, 27) zum Halten des Ultraschall-Aufnehmers (20) im Mund des Patienten, wobei der Ultraschall-Aufnehmer (20) während der Datenaufnahme in Bezug auf den Zahnbereich (1, 2, 3) oder Restzahnbereich ruht,
wobei durch die Stützstruktur (25, 27) eine feste Position des Ultraschall-Aufnehmers (20) in Bezug auf den Zahnbereich (1, 2 ,3) oder Restzahnbereich vorgegeben ist und dadurch eine Relation zu einer Bukkal-, Labial-, Lingual- und/oder Okklusalfläche eines Zahnes definiert wird;
• Beaufschlagen des Ultraschall-Aufnehmers (20) mit Anregungssignalen um eine Ultraschallwelle zu erzeugen,
• Bewegen der Ultraschall-Ablenkmittel (12 ) so, dass die Ultraschallwelle mindestens einen Zahnbereich (1, 2, 3) oder einen Restzahnbereich überstreicht,
• Aufnehmen von an dem Zahnbereich (1, 2, 3) oder Restzahnbereich reflektierten Wellen mittels des Ultraschall-Aufnehmers (20) oder einem separaten Ultraschall-Empfänger und Bereitstellen von entsprechenden Reflektionssignalen,
• Zurverfügungstellen der Anregungssignale und Reflektionssignale für eine Auswerteeinheit, und
• Erzeugen eines Datensatzes durch die Auswerteeinheit aus den Anregungssignalen und Reflektionssignalen, wobei der Datensatz zur Übergabe an ein Bearbeitungssystem oder ein bilderzeugendes System geeignet ist.

2. Das Verfahren nach Anspruch 1, wobei der Ultraschall-Aufnehmer (20) so ausgelegt ist, dass er durch die Bewegung des Ultraschall-Ablenkmittels (12) eine Abtastung des Zahnbereichs (1, 2, 3) oder Restzahnbereichs parallel zu einer Zahnreihe und senkrecht zu der Zahnreihe ermöglicht.

3. Das Verfahren nach Anspruch 1 oder 2, wobei die Ultraschall-Ablenkmittel (12) Spiegel mittel umfassen, die so bewegt werden, dass die Ultraschallwelle durch die Spiegelmittel so gelenkt wird, dass sie den Zahnbereich (1, 2, 3) oder den Restzahnbereich überstreicht, wobei die Spiegelmittel so ansteuerbar und bewegbar sind, dass sie entlang einer vorgegebenen Raumkurve schwenkbar sind.

4. Das Verfahren nach Anspruch 1, wobei
• die Auswerteeinheit eine Geometrieermittlung des Zahnbereichs (1, 2, 3) oder des Restzahnbereichs ausführt, und/oder
• die Auswerteeinheit eine Punktewolke ermittelt, die den Zahnbereich (1, 2, 3) oder den Restzahnbereich repräsentiert, und/oder
• die Auswerteeinheit Daten ermittelt, welche die Topographie mindestens eines Teils des Zahnbereichs (1, 2, 3) oder des Restzahnbereichs beschreiben.

5. Das Verfahren nach Anspruch 1 oder 2, wobei die Auswerteeinheit den Datensatz bearbeitet, um einen 3D-Datensatz zu ermitteln, der als 3D-Oberflächenmodell des Zahnbereichs (1, 2, 3) oder des Restzahnbereichs einsetzbar ist.

6. Das Verfahren nach Anspruch 1 oder 2, wobei zwischen dem Ultraschall-Aufnehmer (20) und dem Zahnbereich (1, 2, 3) oder Restzahnbereich ein Ankopplungskörper (17, 21) oder Dämpfungsmittel, zum Beispiel ein Gelkörper, angeordnet wird, wobei dieser Ankopplungskörper (17, 21) oder dieses Dämpfungsmittel vorzugsweise an oder auf der Stützstruktur (25, 27) gehalten wird.

7. Das Verfahren nach Anspruch 1 oder 2, wobei es sich bei der Stützstruktur (25, 27) um eine Art Gebissschiene oder -löffel (27) handelt und diese vor der Datenaufnahme an oder auf Zähnen (1, 2, 3) im Mund des Patienten platziert wird.

8. Das Verfahren nach Anspruch 1 oder 2, wobei durch die Stützstruktur (25, 27) eine feste Position des Ultraschall-Aufnehmers (20) in Bezug auf den Zahnbereich (1, 2, 3) oder Restzahnbereich vorgegeben wird, um dadurch eine Relation zu einer Bukkal- und/oder Okklusalfläche eines Zahnes zu definieren.

9. Das Verfahren nach Anspruch 1 oder 2, wobei der Ultraschall-Aufnehmer (20) so angesteuert wird, dass dann zusätzliche Scannebenen zum Einsatz kommen, wenn es um die Erhöhung der Informationsdichte für die Darstellung von Kanten und/oder schrägen Flächen und/oder Übergängen und/oder anderen Problemzonen geht.

10. Das Verfahren nach Anspruch 1 oder 2, wobei mindestens während einem Teil der Schritte Wasser durch einen Wassereinlaß in den Ultraschall-Aufnehmer (20) eingespeist wird, um für eine Wasserankopplung des Ultraschall-Aufnehmers (20) zu sorgen.

11. Das Verfahren nach Anspruch 1 oder 2, wobei in einer ersten Phase ein initialer Scan durchgeführt wird und dann ein zweiter Scan durchgeführt wird, der mindestens an einem Ort eine höhere Auflösung hat.

12. Das Verfahren nach Anspruch 1 oder 2, wobei eine Kantenanalyse durchgeführt wird und der Verfahrensablauf dann automatisch den aktuellen Gegebenheiten angepasst wird.

13. Das Verfahren nach Anspruch 1 oder 2, wobei der Datensatz direkt oder indirekt an ein Frässystem übergeben wird, wobei vorzugsweise die Übergabe über ein Netzwerk erfolgt und sich das Frässystem in einem Fräszentrum oder Dentallabor befindet.

14. Vorrichtung (10) zur Datenaufnahme im Mund eines Patienten, wobei die Vorrichtung (10) einen Ultraschall-Aufnehmer (20) und eine Stützstruktur (25, 27) umfasst, wobei
• der Ultraschall-Aufnehmer (20) Ultraschall-Ablenkmittel (12) umfasst, die bewegbar sind,
• ein Ankopplungskörper (17, 21) oder ein Dämpfungsmittel vorgesehen ist, wobei der Ankopplungskörper (17, 21) bzw. das Dämpfungsmittel zwischen dem Ultraschall-Ablenkmittel (12) und einem abzutastenden Zahnbereich (1, 2, 3) oder Restzahnbereich angeordnet ist, wenn die Stützstruktur (25, 27) samt Ultraschall-Aufnehmer (20) im Mund des Patienten platziert ist,
• Mittel zum Beaufschlagen des Ultraschall-Aufnehmers (20) mit Anregungssignalen (14) und zum Bewegen der Ultraschall-Ablenkmittel (12), um so eine Ultraschallwelle zu erzeugen, die mindestens einen Teil des Zahnbereichs (1, 2, 3) oder Restzahnbereichs überstreicht.
der Ultraschall-Aufnehmer (20) durch die Stützstruktur (25, 27) ruhend gelagert ist, wobei durch die Stützstruktur (25, 27) eine feste Position des Ultraschall-Aufnehmers (20) in Bezug auf den Zahnbereich (1, 2 ,3) oder Restzahnbereich vorgegeben ist und dadurch eine Relation zu einer Bukkal-, Labial-, Lingual- und/ oder Okklusalfläche eines Zahnes definiert wird

15. Vorrichtung (10) nach Anspruch 14, wobei der Ultraschall-Aufnehmer (20) eine Sonde (11) umfasst, die zusammen mit den Ultraschall-Ablenkmitteln (12) eine Baueinheit bilden, wobei die Sonde (11) so in Bezug zu den Ultraschall-Ablenkmitteln (12) positioniert ist, dass eine von der Sonde (11) durch Anregung mit den Anregungssignalen (14) erzeugte Ultraschallwelle sich von der Sonde (11) in Richtung der Ultraschall-Ablenkmittel (12) und von dort durch den Ankopplungskörper (17, 21) bzw. das Dämpfungsmittel zum Zahnbereich (1, 2, 3) oder Restzahnbereich gelenkt wird.

16. Vorrichtung (10) nach Anspruch 14, wobei die Sonde (11) und die Ultraschall-Ablenkmittel (12) eine längliche Baueinheit, vorzugsweise eine im Wesentlichen zylinderförmige Baueinheit bilden.

17. Vorrichtung (10) nach Anspruch 14 oder 15, mit einer Antriebseinheit, wobei die Ultraschall-Ablenkmittel (12) hydraulisch oder mechanisch von der Antriebseinheit bewegt werden.

18. Vorrichtung (10) nach Anspruch 14 oder 15, wobei der Ultraschall-Aufnehmer (20) einen Gruppenstrahler umfasst mit mindestens zwei Sende- und zwei Empfangselementen, die vorzugsweise linear als Array angeordnet sind.

19. Vorrichtung (10) nach Anspruch 14 oder 15, wobei der Ultraschall-Aufnehmer (20) eine schalldurchlässige Membrane (18), Folie- oder Gummihülle (60) umfasst.

## Claims

1. Method for recording data in the mouth of a patient by means of an ultrasound recorder (20), **characterized in that** the ultrasound recorder (20) comprises ultrasound deflection means (12, 15, 24) and a support structure (25, 27) for holding the ultrasound recorder (20), wherein the following steps are carried out:
• placing the support structure (25, 27) for holding the ultrasound recorder (20) into the mouth of the patient, wherein the ultrasound recorder (20) is at rest in relation to the tooth region (1, 2, 3) or residual tooth region while data is recorded,
• applying excitation signals to the ultrasound recorder (20) in order to produce an ultrasound wave,
• moving the ultrasound deflection means (12, 15, 24) in such a way that the ultrasound wave passes over at least one tooth region (1, 2, 3) or residual tooth region,
• recording waves reflected at the tooth region (1, 2, 3) or residual tooth region by means of the ultrasound recorder (20) or by means of a separate ultrasound receiver and providing corresponding reflection signals,
• making the excitation signals and reflection signals available to an evaluation unit and
• producing a data record by means of the evaluation unit from the excitation signals and reflection signals, with the data record being suitable for transmission to a processing system or an image producing system.

2. Method according to Claim 1, wherein the ultrasound recorder (20) is designed in such a way that it enables scanning of the tooth region (1, 2, 3) or residual tooth region parallel to a row of teeth and perpendicular to the row of teeth by moving the ultrasound deflection means (12, 15, 24).

3. Method according to Claim 1 or 2, wherein the ultrasound deflection means (12, 15, 24) comprise mirror means, which are moved in such a way that the ultrasound wave is guided by the mirror means in such a way that it passes over the tooth region (1, 2, 3) or the residual tooth region, with the mirror means being actuable and movable in such a way that they are pivotable along a predetermined spatial curve.

4. Method according to Claim 1, wherein
• establishing the geometry of the tooth region (1, 2, 3) or of the residual tooth region is implemented by the evaluation unit and/or
• the evaluation unit establishes a point cloud which represents the tooth region (1, 2, 3) or the residual tooth region and/or
• the evaluation unit establishes data which describes the topography of at least part of the tooth region (1, 2, 3) or of the residual tooth region.

5. Method according to Claim 1 or 2, wherein the evaluation unit processes the data record in order to establish a 3-D data record which can be used as 3-D surface model of the tooth region (1, 2, 3) or of the residual tooth region.

6. Method according to Claim 1 or 2, wherein a coupling body (17, 21) or damping means, e.g. a gel body, is arranged between the ultrasound recorder (20) and the tooth region (1, 2, 3) or residual tooth region, with this coupling body (17, 21) or this damping means preferably being held at or on the support structure (25, 27).

7. Method according to Claim 1 or 2, wherein the support structure (25, 27) is a type of dental splint and/or dental spoon (27) and the latter is placed at or on teeth (1, 2, 3) in the mouth of the patient before data is recorded.

8. Method according to Claim 1 or 2, wherein the support structure (25, 27) predetermines a fixed position of the ultrasound recorder (20) in relation to the tooth region (1, 2, 3) or residual tooth region in order thereby to define a relation to a buccal surface and/or occlusal surface of the tooth.

9. Method according to Claim 1 or 2, wherein the ultrasound recorder (20) is actuated in such a way that additional scanning planes are used when the focus is on increasing the information density for displaying edges and/or oblique surfaces and/or transition and/or other problem zones.

10. Method according to Claim 1 or 2, wherein water is fed into the ultrasound recorder (20) through a water inlet during at least some of the steps in order to ensure water coupling of the ultrasound recorder (20).

11. Method according to Claim 1 or 2, wherein an initial scan is performed during a first phase and a second scan, which has a higher revolution at at least one location, is performed thereafter.

12. Method according to Claim 1 or 2, wherein an edge analysis is performed and the method procedure is thereupon adapted automatically to the current conditions.

13. Method according to Claim 1 or 2, wherein the data record is transmitted directly or indirectly to milling system, with the transmission preferably being implemented via a network and the milling system being situated in a milling centre or dental laboratory.

14. Device (10) for recording data in the mouth of the patient, with the device (10) comprising an ultrasound recorder (20) and a support structure (25, 27), **characterized in that**
• the ultrasound recorder (20) is mounted at rest by the support structure (25, 27),
• the ultrasound recorder (20) comprises ultrasound deflection means (12, 15, 24) which are movable,
• provision is made of a coupling body (17, 21) or a damping means, with the coupling body (17, 21) or the damping means being arranged between the ultrasound deflection means (12, 15, 24) and a tooth region (1, 2, 3), or residual tooth region, to be scanned when the support structure (25, 27) is placed in the mouth of the patient together with the ultrasound recorder (20),
• means for applying excitation signals (14) to the ultrasound recorder (20) and for moving the ultrasound deflection means (12, 15, 24) in order thereby to produce an ultrasound wave which passes over at least part of the tooth region (1, 2, 3) or residual tooth region.

15. Device (10) according to Claim 14, wherein the ultrasound recorder (20) comprises a probe (11) which forms a component together with the ultrasound deflection means (12, 15, 24), wherein the probe (11) is positioned in relation to the ultrasound deflection means (12, 15, 24) in such a way that an ultrasound wave produced by the probe (11) by excitation due to the excitation signals (14) is directed from the probe (11) in the direction of the ultrasound deflection means (12, 15, 24) and from there to the tooth region (1, 2, 3) or residual tooth region via the coupling body (17, 21) or the damping means.

16. Device (10) according to Claim 14, wherein the probe (11) and the ultrasound deflection means (12, 15, 24) form an elongate component, preferably a substantially cylindrical component.

17. Device (10) according to Claim 14 or 15, comprising a drive unit, with the ultrasound deflection means (12, 15, 24) being moved hydraulically or mechanically by the drive unit.

18. Device (10) according to Claim 14 or 15, wherein the ultrasound recorder (20) comprises a group emitter with at least two transmission elements and two deception elements, which are preferably arranged linearly as an array.

19. Device (10) according to Claim 14 or 15, wherein the ultrasound recorder (20) comprises a sound-transmitting membrane (18), film envelope or rubber envelope (60).

## Revendications

1. Procédé d'enregistrement de données dans la bouche d'un patient au moyen d'un enregistreur (20) d'ultrasons, **caractérisé en ce que** l'enregistreur (20) d'ultrasons comporte des moyens (12, 15, 24) de déviation des ultrasons et une structure de soutien (25, 27) qui maintient l'enregistreur (20) d'ultrasons, les étapes suivantes étant exécutées :
placement de la structure de soutien (25, 27) de manière à retenir l'enregistreur (20) d'ultrasons dans la bouche de patient, l'enregistreur (20) d'ultrasons reposant pendant l'enregistrement des données sur la partie (1, 2, 3) de dent ou la partie de reste de dent,
application de signaux d'excitation sur l'enregistreur (20) d'ultrasons de manière à former une onde ultrasonique,
déplacement des moyens (12, 15, 24) de déviation des ultrasons de telle sorte que l'onde ultrasonique balaye au moins une partie (1, 2, 3) de dent ou une partie de reste de dent,
enregistrement des ondes réfléchies par la partie de dent (1, 2, 3) ou la partie de reste de dent au moyen de l'enregistreur (20) d'ultrasons ou d'un récepteur d'ultrasons séparé et préparation de signaux de réflexion correspondants,
transmission des signaux d'excitation et des signaux de réflexion à une unité d'évaluation et
formation d'un jeu de données par l'unité d'évaluation à partir des signaux d'excitation et des signaux de réflexion, le jeu de données convenant pour être transmis à un système de traitement ou à un système de formation d'image.

2. Procédé selon la revendication 1, dans lequel l'enregistreur (20) d'ultrasons est conçu de manière à permettre une détection de la partie (1, 2, 3) de dent ou de la partie de reste de dent parallèlement à une rangée de dents et perpendiculairement à la rangée de dents lors du déplacement du moyen (12, 15, 24) de déviation des ultrasons.

3. Procédé selon les revendications 1 ou 2, dans lequel les moyens (12, 15, 24) de déviation des ultrasons comprennent des moyens à miroir déplacés de telle sorte que l'onde ultrasonique soit déviée par les moyens à miroir de manière à balayer la partie (1, 2, 3) de dent ou la partie de reste de dent, les moyens à miroir pouvant être commandés et déplacés de manière à pivoter le long d'une courbe spatiale prédéterminée.

4. Procédé selon la revendication 1, dans lequel
l'unité d'évaluation exécute une détermination de la géométrie de la partie (1, 2, 3) de dent ou de la partie de reste de dent, et/ou
l'unité d'évaluation détermine un nuage de points qui représente la partie (1, 2, 3) de dent ou la partie de reste de dent, et/ou
l'unité d'évaluation détermine des données qui décrivent la topographie d'au moins une partie de la partie (1, 2, 3) de dent ou de la partie de reste de dent.

5. Procédé selon les revendications 1 ou 2, dans lequel l'unité d'évaluation traite le jeu de données pour déterminer un jeu de données en 3 dimensions qui peut être utilisé comme modèle de surface tridimensionnelle de la partie (1, 2, 3) de dent ou de la partie de reste de dent.

6. Procédé selon les revendications 1 ou 2, dans lequel un corps de couplage (17, 21) ou un moyen d'amortissement, par exemple un corps en gel, est disposé entre l'enregistreur (20) d'ultrasons et la partie (1, 2, 3) de dent ou la partie de reste de dent, ce corps de couplage (17, 21) ou ce moyen d'amortissement étant de préférence maintenus contre ou sur la structure de soutien (25, 27).

7. Procédé selon les revendications 1 ou 2, dans lequel la structure de soutien (25, 27) est une sorte de rail dentaire ou de cuiller dentaire (27) et est placée dans la bouche du patient contre ou sur des dents (1, 2, 3) avant l'enregistrement des données.

8. Procédé selon les revendications 1 ou 2, dans lequel une position fixe de l'enregistreur (20) d'ultrasons par rapport à la partie (1, 2, 3) de dent ou à la partie de reste de dent est prédéterminée par la structure de soutien (25, 27) pour ainsi définir une relation entre la surface buccale et/ou la surface occlusale d'une dent.

9. Procédé selon les revendications 1 ou 2, dans lequel l'enregistreur (20) d'ultrasons est commandé de manière à utiliser des plans supplémentaires de balayage lorsqu'il s'agit d'augmenter la densité d'information en vue de la représentation d'arêtes et/ou de surfaces obliques et/ou de transitions et/ou d'autres zones problématiques.

10. Procédé selon les revendications 1 ou 2, dans lequel au moins pendant une partie des étapes, de l'eau est injectée dans l'enregistreur (20) d'ultrasons par une admission d'eau pour assurer un couplage de l'enregistreur (20) d'ultrasons avec l'eau.

11. Procédé selon les revendications 1 ou 2, dans lequel un balayage initial est réaliste dans une première phase, un deuxième balayage qui présente une résolution plus élevée au moins en un emplacement étant ensuite réalisé.

12. Procédé selon les revendications 1 ou 2, dans lequel une analyse des arêtes est réalisée et le déroulement du procédé est alors adapté automatiquement aux conditions effectives.

13. Procédé selon les revendications 1 ou 2, dans lequel le jeu de données est transmis directement ou indirectement à un système de fraisage, la transmission s'effectuant de préférence par l'intermédiaire d'un réseau et le système de fraisage étant situé dans un centre de fraisage ou un laboratoire dentaire.

14. Dispositif (10) d'enregistrement de données dans la bouche d'un patient, le dispositif (10) présentant un enregistreur (20) d'ultrasons et une structure de soutien (25, 27),
**caractérisé en ce que**
l'enregistreur (20) d'ultrasons est monté de manière à reposer sur la structure de soutien (25, 27),
**en ce que** l'enregistreur (20) d'ultrasons comporte des moyens (12, 15, 24) de déviation des ultrasons qui peuvent être déplacés,
**en ce qu'**un corps de couplage (17, 21) ou un moyen d'amortissement est prévu,
**en ce que** le corps de couplage (17, 21) ou le moyen d'amortissement sont disposés entre le moyen (12, 15, 24) de déviation des ultrasons et une partie (1, 2, 3) de dent ou une partie de reste de dent à palper lorsque la structure de soutien (25, 27) est placée avec l'enregistreur (20) d'ultrasons dans la bouche du patient et
**en ce que** des moyens sont prévus pour appliquer des signaux d'excitation (14) sur l'enregistreur (20) d'ultrasons et de déplacer les moyens (12, 15, 24) de déviation des ultrasons pour ainsi former une onde ultrasonique qui balaye au moins une partie de la partie (1, 2, 3) de dent ou de la partie de reste de dent.

15. Dispositif (10) selon la revendication 14, dans lequel l'enregistreur (20) d'ultrasons comporte une sonde (11) qui forme un module avec les moyens (12, 15, 24) de déviation des ultrasons, la sonde (11) étant placée par rapport aux moyens (12, 15, 24) de déviation des ultrasons de telle sorte qu'une onde ultrasonique formée par la sonde (11) lorsqu'elle est excitée par les signaux d'excitation (14) est déviée par la sonde (11) en direction des moyens (12, 15, 24) de déviation des ultrasons et de là par le corps de couplage (17, 21) ou le moyen d'amortissement vers la partie (1, 2, 3) de dent ou la partie de reste de dent.

16. Dispositif (10) selon la revendication 14, dans lequel la sonde (11) et les moyens (21, 15, 24) de déviation des ultrasons forment un module allongé, de préférence un module essentiellement cylindrique.

17. Dispositif (10) selon les revendications 14 ou 15, doté d'une unité d'entraînement, les moyens (12, 15, 24) de déviation des ultrasons étant déplacés hydrauliquement ou mécaniquement par l'unité d'entraînement.

18. Dispositif (10) selon les revendications 14 ou 15, dans lequel l'enregistreur (20) d'ultrasons comporte un rayonneur de groupe présentant au moins deux éléments d'émission et deux éléments de réception qui sont disposés de préférence en forme de batterie linéaire.

19. Dispositif (10) selon les revendications 14 ou 15, dans lequel l'enregistreur (20) d'ultrasons comporte une membrane (18) acoustiquement transparente et une enveloppe (60) en film ou en caoutchouc.
